Europäisches Patentamt

European Patent Office

Office européen des brevets

(19)

(11) Veröffentlichungsnummer: **0 288 865 B1**

# (12) EUROPÄISCHE PATENTSCHRIFT

(45) Veröffentlichungstag der Patentschrift: **13.11.91**

(51) Int. Cl.⁵: **C08F 8/14**, C08F 222/00

(21) Anmeldenummer: **88106172.5**

(22) Anmeldetag: **19.04.88**

(54) Verfahren zur Herstellung eines stark wasserabsorbierenden Polymerisats.

(30) Priorität: **23.04.87 DE 3713601**

(43) Veröffentlichungstag der Anmeldung:
**02.11.88 Patentblatt 88/44**

(45) Bekanntmachung des Hinweises auf die
Patenterteilung:
**13.11.91 Patentblatt 91/46**

(84) Benannte Vertragsstaaten:
**AT BE CH DE ES FR GB GR IT LI LU NL SE**

(56) Entgegenhaltungen:
**EP-A- 0 209 830      DE-A- 1 520 688**
**DE-A- 2 166 551      DE-A- 2 336 517**
**DE-A- 2 746 683      US-A- 3 453 246**

(73) Patentinhaber: **Chemische Fabrik Stockhausen GmbH**
**Bäkerpfad 25**
**W-4150 Krefeld(DE)**

(72) Erfinder: **Dahmen, Kurt, Dr.**
**von-Velsen-Strasse 6**
**W-4050 Mönchengladbach-Rheydt(DE)**
Erfinder: **Redlof, Horst, Dr.**
**Dahlerdyk 55**
**W-4150 Krefeld(DE)**

(74) Vertreter: **Klöpsch, Gerald, Dr.-Ing. Patentanwälte Klöpsch & Flaccus**
**An Gross St. Martin 6**
**W-5000 Köln 1(DE)**

EP 0 288 865 B1

Rank Xerox (UK) Business Services

**Beschreibung**

Die Erfindung betrifft ein Verfahren zur Herstellung eines stark wasserabsorbierenden Polymerisates, das nur noch einen geringen Anteil an extrahierbaren Oligomeren aufweist.

Als Absorptionsmittel für Flüssigkeiten, insbesondere physiologische Flüssigkeiten im Hygienebereich, sind synthetische Polymere auf der Basis anionischer Monomerer bekannt. Diese auch als Superabsorber bezeichneten Stoffe sind in der Lage, die Flüssigkeit rasch und in großen Mengen, bezogen auf eingesetztes Polymer, aufzunehmen. Die Superabsorber sind wasserunlöslich und quellen stark im Kontakt mit den Flüssigkeiten, was die Vernetzung der Polymeren erfordert, aus denen der Superabsorber aufgebaut ist.

Aus der DE-OS 33 31 644 wird ein Verfahren zur Herstellung von stark wasserabsorbierenden Polymerisaten beschrieben, die hochresistent gegen Salzlösungen sind. Um Resistenz gegen Salzlösungen bei gleichzeitig guter Wasseraufnahmekapazität zu erhalten, wird ein hydrophiles Polymer (z.B. Polyacrylsäure) bei einem bestimmten Wassergehalt des Polymerisats von 10 bis 40 Gew.-% mit einem wenigstens zweifunktionelle Gruppen aufweisenden Vernetzungsmittel vernetzt. Das Vernetzungsmittel muss im Stande sein, mit einer Carboxylgruppe und einer Carboxylatgruppe des Polymerisats zu reagieren.

Als Vernetzungsmittel werden Polyglycidylether genannt. Abgesehen davon, dass der Einsatzbereich dieses verfahrens auf die Verwendung von Vernetzern beschränkt ist, die mindestens zwei mit Carboxylgruppen reagierende funktionelle Gruppen aufweisen müssen, sind die Polymerisate vor der Umsetzung mit den wenigstens bifunktionellen, mit der Carboxylgruppe reagierenden Vernetzungsmittel unvernetzt.

In der DE-OS 34 29 379 wird ein Verfahren zur Herstellung eines hochreaktiven wasserabsorbierenden Harzes beschrieben, in dem das wasserabsorbierende Harz, welches Carboxyl- oder Carboxylatgruppen enthält und einen Wassergehalt von 50 Gew.-% oder weniger aufweist, mit einem hydrophilen Polymer mit einer reaktiven Gruppe oder einem hydrophilen Monomer mit einer reaktiven Gruppe imprägniert und das Monomer polymerisiert wird. Das hydrophile Polymer kann nach oder während seiner Polymerisation vernetzt werden. Als Vernetzer für das hydrophile Polymer bzw. das hydrophile Monomer werden Verbindungen mit wenigstens zwei funktionellen Gruppen, z.B. Polyglycidylether wie Ethylenglycoldiglycidylether, erwähnt. Bei diesem Verfahren werden jedoch große Mengen an hydrophilen Monomeren bzw. Polymeren (ab 10 % bezogen auf das Monomere der vorhergegangenen Polymerisation) benötigt, um die gewünschten Absorptionseigenschaften zu erzielen. Die Beschränkung auf hydrophile Monomere und hydrophile Polymere beeinträchtigt außerdem die Auswahl an verwertbaren Substanzen, insbesondere, wenn das wasserabsorbierende Harz nach dem Umkehrsuspensionspolymerisationsverfahren hergestellt wird.

In der DE-OS 35 23 617 werden wasserabsorbierende Mittel beschrieben, die durch Umsetzung eines wasserabsorbierenden Harzes, z.B. von teilneutralisierter Polyacrylsäure, die auch vernetzt sein kann, mit 0,001 bis 10 Gew.-Teilen eines mehrwertigen Alkohols, z.B. Glycerin, in Gegenwart von Wasser und hydrophilen Lösungsmitteln und anschließendem Erwärmen erhalten werden. Durch die Umsetzung mit dem mehrwertigen Alkohol wird das wasserabsorbierende Harz oberflächlich vernetzt. Eine solche Arbeitsweise ist aber besonders bei den durch Umkehrsuspensionspolymerisation hergestellten Produkten wegen nachträglich erfolgender weiterer Arbeitsgänge unwirtschaftlich.

Aufgabe der Erfindung ist es, ein einfaches und wirtschaftliches Verfahren für die Herstellung solcher vorstehend als Superabsorber bezeichneten Absorptionsmittel für Flüssigkeiten, insbesondere physiologische Flüssigkeiten, im Hygienebereich bereitzustellen, die nur noch einen geringen Anteil Oligomeren enthalten, welche durch Wasser oder physiologische Kochsalzlösung extrahierbar sind. Es hat sich nämlich gezeigt, dass die Wirksamkeit der Vernetzung eines solchen Absorptionsmittels, die für die Wasserunlöslichkeit und das herausragende Quellvermögen entscheidend ist, deutlich an dem Anteil Oligomerer einschließlich Monomerer erkennbar ist, der aus dem dem Superabsorber zugrundeliegenden carboxylgruppenhaltigen Polymerisat durch Wasser oder physiologische Kochsalzlösung extrahiert werden kann. Dieser auch für die Verwendung des wasserabsorbierenden Harzes im Hygienebereich wichtige Aspekt ist bisher nicht berücksichtigt worden.

Diese Aufgabe wird erfindungsgemäß durch die Merkmale des Kennzeichens von Patentanspruch 1 gelöst.

Überraschenderweise reichen geringe Mengen einer hydrophoben ungesättigten Glycidylverbindung, wahlweise unter Zusatz eines mindestens bifunktionell ungesättigten Vernetzers aus, um ein Absorptionsmittel zu erhalten, das weniger als 20, vorzugsweise weniger als 10 Gew.-% an mit Wasser oder physiologischer Kochsalzlösung extrahierbaren Oligomeren einschließlich Monomeren enthält.

Als hydrophobe ungesättigte Glycidylverbindung werden bevorzugt Monoglycidylverbindungen mit einer maximalen Anzahl von 10 Kohlenstoffatomen eingesetzt, vorzugsweise Glycidylester ungesättigter Carbonsäuren wie Glycidylacrylat und Glycidylmethacrylat sowie ungesättigte Glycidylether wie Glycidylallylether oder ein Gemisch dieser Verbindungen. Die Menge an hydrophober ungesättigter Glycidylverbindung (im weiteren auch als hydrophobes Monomer bezeichnet), die eine ausreichende Modifizierung des carboxylgruppenhaltigen Harzes bewirkt, ist gering und liegt im allgemeinen bei 0,01 - 5,0 Gew.-%, vorzugsweise bei 0,02 - 2 %, besonders bevorzugt bei 0,2 - 0,4 %, bezogen auf das carboxyl(at)-gruppenhaltige Polymerisat.

Die hydrophobe ungesättigte Glycidylverbindung kann zusammen mit einem mindestens bifunktionell ungesättigten Vernetzungsmittel eingesetzt werden. Geeignet hierfur sind z.B. (meth)acryl- und allylgruppenhaltige Stoffe. Vorzugsweise werden Triallylmethylammoniumchlorid, Trimethylolpropantriacrylat, Tetraallylammoniumchlorid, Alkylenbisacrylamid, Glycerinpropoxytriacrylat eingesetzt. Die Zugabe des Vernetzungsmittels hat den Zweck, die Vernetzungsreaktion zu beschleunigen und zu vervollständigen. Die Vernetzungsreaktion findet dann parallel zur Polymerisation des hydrophoben Monomers statt. Das Vernetzungsmittel kann gleichzeitig mit dem hydrophoben Monomer oder anschließend an dessen Zugabe dem carboxylgruppenhaltigen Polymerisat zugeführt werden.

Die Menge des verwendeten Vernetzungsmittels liegt im allgemeinen bei 0,01 bis 5 Gew.-%.

Die Verfahren, stark wasserabsorbierende Harze durch Polymerisation carboxyl- oder carboxylatgruppenhaltiger hydrophiler Monomerer herzustellen, sind an sich bekannt, so z.B. Lösungspolymerisation, adiabatische Polymerisation und Polymerisation in umgekehrter Suspension. Das letztere, die Umkehrphasensuspensionspolymerisation, erweist sich für die Ausführung der Erfindung als besonders geeignet und wird bevorzugt. Die Umsetzung des Polymerisates mit dem hydrophoben Monomer allein oder auch in Kombination mit dem oben erwähnten Vernetzungsmittel ist hierbei besonders leicht in situ ausführbar, und es wird außerdem ein gut rieselfähiges, staubfreies Produkt enger Korngrößenverteilung gewonnen. In aller Regel wird bei dieser Umkehrphasensuspensionspolymerisation das carboxyl- oder carboxylatgruppenhaltige hydrophile Monomer in einer wäßrigen Lösung in Gegenwart eines wasserlöslichen Initiators und ggf. eines Vernetzers in einem Dispersionsmedium, bestehend aus einem hydrophoben organischen Lösungsmittel oder einem Gemisch hydrophober organischer Lösungsmittel und einem öllöslichen Schutzkolloid, suspendiert und polymerisiert.

Geeignete carboxyl- oder carboxylatgruppenhaltige Monomeren sind Acrylsäure und ihre Salze und Methacrylsäure und ihre Salze, die aber auch in Kombination mit weiteren hydrophilen Monomeren als Comonomeren wie z.B. Maleinsäure, Itaconsäure, Acrylamid, 2-Acrylamido-2-methylpropansulfonsäure, 2-Hydroxyethyl(meth)acrylat, Hydroxypropyl(meth)acrylat, Dimethylaminopropylacrylamid eingesetzt werden können. Vorzugsweise werden Acrylsäure und ihre Alkali- und Ammoniumsalze verwendet.

Die Polymerisation der hydrophilen Monomere wird in Gegenwart wasserlöslicher Initiatoren wie Persulfaten, Hydroperoxiden oder Azoverbindungen für sich oder in Kombination durchgeführt.

Zur Erzielung guter Absorptionseigenschaften ist es vorteilhaft, in der Polymerisationsstufe der hydrophilen Monomeren eine mehrfach funktionelle Verbindung als Vernetzer einzusetzen. Diese vernetzende Verbindung ist in ihrer Funktionalität nicht auf die Gruppe der mehrfach ungesättigten Verbindungen beschränkt, sondern es können auch sogenannte Polyglycidylverbindungen verwendet werden. Zu diesen mehrfach funktionellen Verbindungen sind demnach einerseits die Acryl- und Methacrylester mehrwertiger Alkohole, Alkylenbis(meth)acrylamide, Polyallylamine, Polyallylammoniumverbindungen, Addukte von Diallylamin an Epichlorhydrin oder an 1,3-Dichlorpropanol-2, im Amidteil ungesättigte (Meth)acrylamide, andererseits Glycidylether mehrwertiger Alkohole zu rechnen.

Auch in diesem Sinne gemischt funktionelle Verbindungen sind für die Vernetzung in der Polymerisationsstufe der hydrophilen Monomeren einsetzbar. Bevorzugt verwendet werden Pentaerythrittriacrylat. Glycerintriglycidylether.

Als hydrophobes organisches Lösungsmittel kann jedes nichtpolare Lösungsmittel wie z.B. ein üblicher aliphatischer oder cycloaliphatischer Kohlenwasserstoff eingesetzt werden. Bevorzugt verwendet wird Cyclohexan. Geeignete Dispergiermittel, die öllösliche Schutzkolloide bilden, sind z.B. Sorbitanfettsäureester, Celluloseether und Celluloseester. Vorteilhaft ist es, Celluloseether zu verwenden, da sie die Suspension gut stabilisieren und die Anbackungen der Innenwand des Polymerisationsgefäßes minimal sind. Vorzugsweise wird Ethylcellulose verwendet.

Die Umsetzung des carboxyl(at)gruppenhaltigen Polymerisats mit der ungesättigten Glycidylverbindung, wahlweise unter gleichzeitiger Anwesenheit eines mindestens bifunktionell ungesättigten Vernetzungsmittels oder anschließender Zugabe oder Abwesenheit des Vernetzungsmittels, erfolgt nach der Herstellung des hydrophilen Carboxyl- und/oder Carboxylgruppen enthaltenden Polymerisats. Die geringe Menge an hydrophobem Monomer ist erfindungsgemäß und entscheidend, weil sie den Anteil an mit Wasser oder physiologischer Kochsalzlösung aus dem fertigen Polymerisat extrahierbarer Oligomerer einschließlich Monomerer auf unter 20 Gew.-%, vorzugsweise auf unter 10 Gew.-%, herabsetzt und derart ein hochwirksam vernetztes Produkt mit stark wasserabsorbierenden Eigenschaften erzielt wird. Das hydrophobe Monomer und wahlweise der Vernetzer werden in einem hydrophoben Lösungsmittel aufgenommen, vorzugsweise in dem schon während der Polymerisation des hydrophilen Monomeren verwendeten hydrophoben Lösungsmittel. Die Polymerisation der ungesättigten Glycidylverbindung und des Vernetzungsmittels wird in Gegenwart öllöslicher Initiatoren durchgeführt. Das Endprodukt wird durch Filtration isoliert und unter vermindertem Druck bei 120° C 2 Stunden getrocknet.

Als physiologische Lösung zur Ermittlung der Absorptionskapazität wurde Modellurin verwendet. Die Absorption wurde ohne und mit Druckbelastung, wie in der EP 0068189 beschriebenen ermittelt und ist in Tabelle 3 in g Modellurin/g Polymerisat angegeben.

Die Menge der durch Wasser oder physiologische Kochsalzlösung extrahierbaren Oligomeren und Monomeren ist erfindungsgemäß gering und wurde wie folgt ermittelt:

200 mg des Polymerisats wurden in 100 ml 0,9 % Kochsalzlösung aufgenommen und 12 Stunden gerührt. Danach wurde durch Weißband- und Membranfilter filtriert, die Menge des Filtrats festgestellt und mit Natronlauge vollständig neutralisiert. Der Gehalt an Carboxylgruppen wurde dann verdrängungstritrimetrisch bestimmt und mit dem mittleren Molekulargewicht des teilneutralisierten Monomeren verrechnet.

Vergleichsbeispiel

180,1 g Acrylsäure wurde unter Kühlung mit 327,2 g 30 % Kalilauge neutralisiert und anschließend mit 400 mg Pentaerythrittriacrylat, 62 mg Kaliumpersulfat und 250 mg ABAH (2,2' Azobis-(2-amidinopropan)-dihydrochlorid) versetzt. Getrennt hiervon wurden in einem 2 l-Kolben mit Rückflüßkühler, Rührer, Tropftrichter und Innenthermometer 800 g Cyclohexan und 10 g Ethylcellulose vorgelegt. Nach Erwärmen auf 55° C wurde ein geringer Unterdruck zur Austreibung des Sauerstoffs angelegt, der bis zum Polymerisationsende aufrecht erhalten wurde. Die Monomerlösung wurde innerhalb 1 Stunde zugetropft, anschließend zur Vervollständigung der Polymerisation 3 Stunden unter allmählichem Abbau des Unterdrucks und Erwärmen auf 70° C nachgerührt. Das Polymerisat wurde durch Filtration isoliert und bei 120° C 2 Stunden unter verringertem Druck getrocknet. Der Anteil an extrahierbaren Oligomeren einschließlich Monomeren, im folgenden kurz als extrahierbarer Anteil bezeichnet, betrug 16,1 Gew.%.

Die Erfindung wird durch die nachfolgenden Beispiele erläutert:

Beispiel 1

180,1 g Acrylsäure wurde unter Kühlung mit 327,2 g 30 % Kalilauge neutralisiert und anschließend mit 400 mg Pentaerythrittriacrylat, 62 mg Kaliumpersulfat und 250 mg ABAH versetzt. Getrennt hiervon wurden in einem 2 l-Kolben mit Rückflußkühler, Rührer, Tropftrichter und Innenthermometer 800 g Cyclohexan und 10 g Ethylcellulose vorgelegt. Nach Erwärmen auf 55° C wurde ein geringer Unterdruck zur Austreibung des Sauerstoffs angelegt, der bis zum Polymerisationsende aufrechterhalten wurde. Die Monomerlösung wurde innerhalb 1 Stunde zugetropft, anschließend zur Vervollständigung der Polymerisation 3 Stunden unter allmählichem Abbau des Unterdrucks auf Erwärmen auf 70° C nachgerührt. Anschließend wurde eine Lösung von 1 g Glycidylacrylat, 25 mg t-Butylhydroperoxid und 50 mg Azobisisobutyronitril in 10 ml Cyclohexan dazugegeben. Nach weiteren 2 Stunden Nachrühren bei 70° C wurde das Polymerisat durch Filtration isoliert und bei 120° C 2 Stunden unter verringertem Druck getrocknet. Der extrahierbare Anteil betrug 5,3 Gew.-%.

Beispiele 2 bis 9

In den Beispielen 2 - 9 (s. nachstehende Tabelle 1) sind gegenüber Bsp. 1 lediglich die Vernetzermengen für die teilneutralisierte Acrylsäure (Spalte 2) und die Menge an hydrophobem Monomer - wahlweise mit Vernetzer - (Spalte 3) abgeändert. Die extrahierbaren Anteile in Gew.-% sind Spalte 4 zu entnehmen.

Tabelle 1

| Bsp | 2 (mg)[1] | 3 (mg)[1] | 4 (Gew%) |
|---|---|---|---|
| 2 | 100 PETA | 1000 GA | 8,4 |
| 3 | 50 PETA | 500 GA | 7,8 |
| 4 | 50 PETA | 500 GA + 500 TAMAC | 19,4 |
| 5[2] | 50 PETA | 500 GA + 500 TMPTA | 13,6 |
| 6 | 25 PETA | 5000 GA + 1000 TAMAC | 8,3 |
| 7 | 50 GTGE | 500 GA | 6,0 |
| 8 | 200 PETA | 1000 GMA | 18,3 |
| 9 | 200 PETA | 500 GA + 1000 GPTA | 8,0 |

1) PETA = Pentaerythrittriacrylat
GTGE = Glycerintriglycidylether
GA = Glycidylacrylat
GMA = Glycidylmethacrylat
TAMAC = Triallylmethylammoniumchlorid
TMPTA = Trimethylolpropantriacrylat
GPTA = Glycerinpropoxytriacrylat
2) Zur Neutralisation wurden 280,5 g 30 % Kalilauge verwendet und 14 g Wasser Zugesetzt.

Die Versuche zu den Beispielen 2 bis 9 wurden im übrigen, wie in Beispiel 1 beschrieben, ausgeführt.

Beispiele 10 bis 13

Tabelle 2

| Bsp | 2 (mg) | 3 (mg) | 4 (Gew%) |
|---|---|---|---|
| 10 | 400 PETA | 500 GA | 9,6 |
| 11 | 50 PETA | 500 GA | 7,1 |
| 12 | 100 GTGE | 500 GA | 11,4 |
| 13 | 50 GTGE | 500 GA | 4,9 |

Beispiel 14

Hier wurden 180,1 g Acrylsäure mit einer Lösung von 138,4 g Ammoniumhydrogencarbonat in 108,5 g Wasser neutralisiert. Es wurden in der Acrylsäurelösung 50 mg PETA und als hydrophobes Monomer 500 mg GA verwendet. Im übrigen wurde wie in Beispiel 1 verfahren. Der extrahierbare Anteil betrug 3,0 Gew%.

Tabelle 3

| Bsp. | Max. absorb. Modellurin g/g | n. Belastung g/g |
|---|---|---|
| Vergl.-Bsp.1 | 53,9 | 38,6 |
| 1 | 54,4 | 32,4 |
| 2 | 61,7 | 41,8 |
| 3 | 50,1 | 29,1 |
| 4 | 53,9 | 48,2 |
| 5 | 67,7 | 44,8 |
| 6 | 40,6 | 25,1 |
| 7 | 67,1 | 47,3 |
| 8 | 54,0 | 38,7 |
| 9 | 60,0 | 43,3 |
| 10 | 52,9 | 32,4 |
| 11 | 46,2 | 27,1 |
| 12 | 56,6 | 43,4 |
| 13 | 47,2 | 31,9 |
| 14 | 63,4 | 38,4 |

**Patentansprüche**

1. Verfahren zur Herstellung eines stark wasserabsorbierenden Polymerisats mit niedrigem Gehalt an mit Wasser oder physiologischer Kochsalzlösung extrahierbaren Oligomeren, dadurch gekennzeichnet, dass man ein vernetztes Carboxyl- und/oder Carboxylatgruppen enthaltendes Polymer mit wenigstens einer ungesättigten hydrophoben Glycidylverbindung umsetzt und danach polymerisiert.

2. Verfahren nach Anspruch 1, dadurch gekennzeichnet, dass man mit einer Glycidylverbindung umsetzt, die maximal 10 Kohlenstoffatome aufweist.

3. Verfahren nach einem der Anspruche 1 bis 2, dadurch gekennzeichnet, dass man mit einer Monoglycidylverbindung umsetzt.

4. Verfahren nach Anspruch 3, dadurch gekennzeichnet, dass man als ungesättigte hydrophobe Glycidylverbindung Glycidyl(meth)acrylat und/oder Glycidylallylether einsetzt.

5. Verfahren nach einem der Ansprüche 1 bis 4, dadurch gekennzeichnet, dass die Umsetzung mit der Glycidylverbindung und/oder die darauffolgende Polymerisation in Gegenwart einer mindestens bifunktionell ungesättigten Verbindung als Vernetzungsmittel vorgenommen wird.

6. Verfahren nach Anspruch 5, dadurch gekennzeichnet, dass als mehrfach ungesättigte Verbindung Triallylmethylammoniumchlorid, Trimethylolpropantriacrylat, Glycerinpropoxytriacrylat und/oder Tetraallylammoniumchlorid verwendet werden.

7. Verfahren nach einem der Ansprüche 1 bis 6, dadurch gekennzeichnet, dass als Carboxyl- und/oder Carboxylatgruppen enthaltende Polymere Polyacrylsäure, Polymethacrylsäure, die Alkali- und Ammoniumpoly(meth)acrylate und/oder die Copolymeren von (Meth)acrylsäure mit ihren Alkali- und/oder Ammoniumsalzen und/oder die Copolymerisate von (Meth)acrylsäure mit anderen hydrophilen Monomeren verwendet werden.

8. Verfahren nach Anspruch 7, dadurch gekennzeichnet, dass Carboxyl- und/oder Carboxylatgruppen enthaltende Polymerisate eingesetzt werden, die als weitere hydrophile Monomere Maleinsäure, Itaconsäure, Acrylamid, 2-Acrylamido-2-methylpropansulfonsäure, 2-Hydroxyethyl(meth)acrylat, Hydroxypropyl(meth)acrylat, und/oder Dimethylaminopropylacrylamid enthalten.

9. Verfahren nach einem der Ansprüche 1 bis 8, dadurch gekennzeichnet, dass das vernetzte carboxylgruppenhaltige Polymer durch Umkehrphasensuspensionspolymerisation erhalten wird.

10. Verfahren nach Anspruch 9, dadurch gekennzeichnet, dass das vernetzte carboxylgruppenhaltige Polymer durch Umkehrphasensuspensionspolymerisation einer wässrigen Acrylsäurelösung oder einer wässrigen teilneutralisierten Acrylsäurelösung in Gegenwart einer mehrfach funktionellen Verbindung als Vernetzer unter Verwendung eines wasserlöslichen Initiators hergestellt wird.

11. Verfahren nach einem der Ansprüche 1 bis 10, dadurch gekennzeichnet, dass die Polymerisation nach Umsetzung mit der Glycidylverbindung unter Verwendung öllöslicher Initiatoren durchgeführt wird.

12. Verfahren nach einem der Ansprüche 1 bis 11, dadurch gekennzeichnet, dass die Glycidylverbindung in einer Menge von 0,01 bis 5 Gew.-%, bezogen auf das carboxyl- und/oder carboxylatgruppenhaltige Polymerisat eingesetzt wird.

13. Verfahren nach Anspruch 5, dadurch gekennzeichnet, dass das mindestens bifunktionell ungesättigte Vernetzungsmittel in Mengen von 0,01 - 5 Gew.-%, bezogen auf Carboxyl und/oder carboxylatgruppenhaltige Polymerisat, eingesetzt wird.

14. Stark wasserabsorbierendes Mittel mit niedrigem Gehalt an mit Wasser oder physiologischer Kochsalzlösung extrahierbarer Oligomerer, erhältlich nach einem der Ansprüche 1 bis 13.

15. Verwendung der wasserabsorbierenden Polymerisate nach Ansprüchen 1 bis 11 zur Absorption von Körperflüssigkeiten im Hygienebereich.

## Claims

1. A process for the production of a highly water-absorbing polymer having a low content of oligomers extractable with water or a physiological solution of sodium chloride, characterized in that a cross-linked carboxyl- and/or carboxylate groups-containing polymer is reacted with at least one unsaturated hydrophobic glycidyl compound and then polymerized.

2. The process according to claim 1 characterized in that the reaction is carried out with a glycidyl compound having a maximum of 10 carbon atoms.

3. The process according to claims 1 to 2 characterized in that the reaction is carried out with a monoglycidyl compound.

4. The process according to claim 3 characterized in that glycidyl(meth)acrylate and/or glycidyl allyl ether is used as unsaturated hydrophobic glycidyl compound.

5. The process according to any one of claims 1 to 4 characterized in that the reaction with the glycidyl compound and/or the subsequent polymerization is carried out in the presence of an at least bifunctionally unsaturated compound used as cross-linking agent.

6. The process according to claim 5 characterized in that triallyl methylammonium chloride, trimethylolpropane triacrylate, glycerol propoxytriacrylate, and/or tetraallyl ammonium chloride are used as multiply unsaturated compound.

7. The process according to any one of claims 1 to 6 characterized in that polyacrylic acid, polymethacrylic acid, the alkali- and ammonium poly(meth)acrylates, and/or the copolymers of (meth)-acrylic acid with their alkali- and/or ammonium salts, and/or the copolymers of (meth)-acrylic acid with other hydrophilic monomers are used as carboxyl- and/or carboxylate-groups-containing polymers.

8. The process according to claim 7 characterized in that carboxyl- and/or carboxylate groups-containing polymers are used comprising as further hydrophilic monomers maleic acid, itaconic acid, acrylamide, 2-acrylamido-2-methylpropane sulphonic acid, 2-hydroxyethyl(meth)acrylate, hydroxypropyl(meth)-acrylate, and/or dimethylamino propylacrylamide.

9. The process according to any one of claims 1 to 8 characterized in that the cross-linked carboxyl-groups-containing polymer is obtained by reversed-phase suspension polymerization.

10. The process according to claim 9 characterized in that the cross-linked carboxyl groups-containing polymer is produced by reversed-phase suspension polymerization of an aqueous acrylic acid solution or an aqueous partially neutralized acrylic acid solution in the presence of a multifunctional compound used as cross-linking agent under the use of a water-soluble initiator.

11. The process according to any one of claims 1 to 10 characterized in that, after the reaction with the glycidyl compound, the polymerization is carried out under the use of oil-soluble initiators.

12. The process according to any one of claims 1 to 11 characterized in that the glycidyl compound is used in an amount of 0.01 to 5%-wt., relative to the carboxyl-and/or carboxylate-groups-containing polymer.

13. The process according to claim 5 characterized in that the at least bifunctionally unsaturated cross-linking agent is used in amounts of 0.01 to 5%-wt., relative to the carboxyl- and/or carboxylate groups containing polymer.

14. A highly water-absorbing agent with a low content of oligomers which are extractable with water or a physiological solution of sodium chloride obtainable according to the process as defined in claims 1 to 13.

15. The use of the water-absorbing polymers according to claims 1 to 11 for the absorption of body liquids in the hygienic sector.

**Revendications**

1. Procédé de préparation d'un polymère absorbant fortement l'eau, à faible teneur en oligomères extractibles par l'eau ou une solution de sel de cuisine physiologique, caractérisé en ce que l'on fait réagir un polymère contenant des radicaux carboxyle et/ou carboxylate avec au moins un composé glycidylique insaturé, hydrophobe et on le polymérise ensuite.

2. Procédé suivant la revendication 1, caractérisé en ce que l'on opère la réaction avec un composé glycidylique qui contient au maximum 10 atomes de carbone.

3. Procédé suivant l'une des revendications 1 et 2, caractérisé en ce que l'on opère la réaction avec un composé monoglycidylique.

4. Procédé suivant la revendication 3, caractérisé en ce que l'on utilise, à titre de composé glycidylique insaturé, hydrophobe, le (méth)acrylate de glycidyle et/ou l'éther glycidylallylique.

5. Procédé suivant l'une quelconque des revendications 1 à 4, caractérisé en ce que l'on entreprend la réaction avec le composé glycidylique et/ou la polymérisation subséquente en présence d'un composé insaturé au moins bifonctionnel à titre d'agent de réticulation.

6. Procédé suivant la revendication 5, caractérisé en ce que l'on utilise, à titre de composé polyinsaturé, le chlorure de triallylméthylammonium, le triacrylate de triméthylolpropane, le propoxytriacrylate de glycérine et/ou le chlorure de tétraallylammonium.

7. Procédé selon l'une quelconque des revendications 1 à 6, caractérisé en ce que l'on utilise, à titre de polymères contenant des radicaux carboxyle et/ou carboxylate, l'acide polyacrylique, l'acide polyméthacrylique, les poly(méth)acrylates de métaux alcalins et d'ammonium et/ou les copolymères de l'acide (méth)acrylique avec ses sels de métaux alcalins et/ou d'ammonium et/ou les copolymères de l'acide (méth)acrylique avec d'autres monomères hydrophiles.

8. Procédé suivant la revendication 7, caractérisé en ce que l'on met en oeuvre des polymères contenant des radicaux carboxyle et/ou carboxylate qui contiennent, à titre d'autres monomères hydrophiles, l'acide maléique, l'acide itaconique, l'acrylamide, l'acide 2-acrylamido-2-méthylpropanesulfonique, les (méth)acrylate de 2-hydroxyéthyle, le (méth)acrylate d'hydroxypropyle et/ou le diméthylaminopropylacrylamide.

9. Procédé selon l'une des revendications 1 à 8, caractérisé en ce que l'on obtient le polymère contenant des radicaux carboxyle, réticulé, par polymérisation en suspension à inversion de phases.

10. Procédé selon la revendication 9, caractérisé en ce que l'on prépare le polymère contenant des radicaux carboxyle, réticulé, par polymérisation en suspension à inversion de phases d'une solution aqueuse d'acide acrylique ou d'une solution aqueuse d'acide acrylique partiellement neutralisée, en présence d'un composé polyfonctionnel servant d'agent de réticulation et en recourant à l'emploi d'un amorceur soluble dans l'eau.

11. Procédé suivant l'une des revendications 1 à 10, caractérisé en ce que l'on réalise la polymérisation après la réaction avec le composé glycidylique, en recourant à l'emploi d'amorceurs oléosolubles.

12. Procédé selon l'une des revendications 1 à 11, caractérisé en ce que l'on met en oeuvre le composé glycidylique en une proportion de 0,01 à 5% en poids, par rapport au polymère contenant des radicaux carboxyle et/ou carboxylate.

13. Procédé suivant la revendication 5, caractérisé en ce que l'on utilise l'agent de réticulation insaturé au moins bifonctionnel en proportions de 0,01 à 5% en poids, par rapport au polymère contenant des radicaux carboxyle et/ou carboxylate.

14. Agent absorbant fortement l'eau à faible teneur en oligomères extractibles par l'eau ou une solution de sel de cuisine physiologique, obtenu selon l'une quelconque des revendications 1 à 13.

15. Utilisation des polymères absorbant l'eau selon les revendications 1 à 11 en vue de l'absorption de liquides corporels dans le domaine hygiénique.